# EUROPÄISCHE PATENTSCHRIFT

(11) **EP 2 859 569 B1**
(45) Veröffentlichungstag und Bekanntmachung des Hinweises auf die Patenterteilung: **15.11.2017**
(21) Anmeldenummer: 12732807.8
(22) Anmeldetag: 19.06.2012
(51) Int. Cl.: H01H 33/59, H01H 9/54

(54) **GLEICHSPANNUNGSSCHALTER ZUM SCHALTEN EINES GLEICHSTROMES IN EINEM ABZWEIG EINES GLEICHSPANNUNGSNETZKNOTENS**
DC SWITCH FOR SWITCHING DC CURRENT IN A BRANCH OF A NETWORK NODE
INTERRUPTEUR CC DE COMMUTATION D'UN COURANT CONTINU DANS UN EMBRANCHEMENT D'UN NOEUD DE RÉSEAU

(43) Veröffentlichungstag der Anmeldung: 15.04.2015
(73) Patentinhaber: Siemens Aktiengesellschaft, 80333 München (DE)
(72) Erfinder: BAKRAN, Mark-Matthias, 91052 Erlangen (DE)
(86) Internationale Anmeldenummer: PCT/EP2012/061726
(87) Internationale Veröffentlichungsnummer: WO 2013/189524

(56) Entgegenhaltungen:
- EP-A1- 0 660 352
- WO-A1-2011/034140
- WO-A1-2011/057675
- US-A1- 2008 143 462

## Beschreibung

Die Erfindung betrifft eine Vorrichtung zum Schalten eines Gleichstromes in einem Abzweig eines Gleichspannungsnetzknotens mit einem Dauerstrompfad, in dem ein mechanischer Schalter angeordnet ist, einem den Dauerstrompfad überbrückenden Schaltstrompfad, in dem eine Leistungsschalteinheit angeordnet ist, die ein- und abschaltbare Leistungshalbleiterschalter aufweist und die zum Unterbrechen eines Kurzschlussstromes im Fehlerfall eingerichtet ist, und einer Längsspannungsquelle zum Erzeugen einer Gegenspannung in der aus Dauerstrompfad und Schaltstrompfad gebildeten Masche.

Eine solche Vorrichtung ist beispielsweise aus der WO 2011/057675 A1 bereits bekannt. Dort ist ein Gleichspannungsschalter beschrieben, der einen Dauerstrompfad mit einem mechanischen Schalter sowie einen Abschaltzweig aufweist, der dem Dauerstrompfad parallel geschaltet ist. In dem Abschaltzweig ist eine Leistungsschalteinheit in Gestalt einer Reihenschaltung von Leistungshalbleiterschaltern angeordnet, denen jeweils eine Freilaufdioden gegensinnig parallel geschaltet ist. Die Leistungshalbleiterschalter und Freilaufdiode der Leistungsschalteinheiten sind antiseriell angeordnet, d.h. die abschaltbaren Leistungshalbleiterschalter sind in Reihe angeordnet, wobei für jeden Leistungshalbleiterschalter ein entsprechender Leistungshalbleiterschalter mit entgegengesetzter Durchlassrichtung vorgesehen ist. Auf diese Art und Weise kann im Abschaltzweig durch die Leistungsschalteinheit der Strom in beiden Richtungen unterbrochen werden. Im Betriebs- oder Dauerstrompfad ist neben dem mechanischen Schalter auch ein elektronischer Hilfsschalter in Reihe zum mechanischen Schalter angeordnet. Im Normalbetrieb fließt der Strom über den Betriebsstrompfad und somit über den elektronischen Hilfsschalter sowie über den geschlossenen mechanischen Schalter, da die vielen Leistungshalbleiterschalter des Abschaltzweigs einen erhöhten Widerstand für den Gleichstrom darstellen. Zum Unterbrechen beispielsweise eines Kurzschlussstromes wird der elektronische Hilfsschalter, der auch als Längsspannungsquelle bezeichnet werden kann, in seine Trennstellung überführt. Hierdurch steigt der Widerstand im Betriebsstrompfad an, so dass der Gleichstrom in den Abschaltzweig kommutiert. Der mechanische Trennschalter kann daher stromlos geöffnet werden. Der über den Abschaltzweig geführte Kurzschlussstrom kann durch die Leistungsschalteinheit unterbrochen werden. Zur Aufnahme der im Gleichspannungsnetz gespeicherten und beim Schalten abzubauende Energie sind Ableiter vorgesehen, die den Leistungshalbleiterschaltern des Abschaltzweiges jeweils parallel geschaltet sind.

Weitere Gleichspannungsschalter zum Schalten von Kurzschlussströmen bei hohen Spannungen sind in der DE 694 08 811 T2, der EP 0660352 A1, der WO 2011/034140 A1, der US 2008/143462 A1 und in der US 5,999,388 offenbart.

Der eingangs genannten Vorrichtung haftet der Nachteil an, dass diese sich nicht zur Lastflusssteuerung einsetzen lässt, da die an der Längsspannungsquelle entstehenden Verluste dann über längere Zeiträume hinweg oder gar permanent auftreten. Dies ist aus wirtschaftlichen und ökologischen Gesichtspunkten heraus nicht vertretbar.

Aufgabe der Erfindung ist es daher, eine Vorrichtung der eingangs genannten Art bereitzustellen, die wirtschaftlich auch über lange Zeiträume hinweg zur Steuerung des Lastflusses an einem Netzknoten eingesetzt werden kann.

Die Erfindung löst diese Aufgabe dadurch, dass die Längsspannungsquelle Mittel zum Ein- und Auskoppeln elektrischer Energie aufweist.

Die erfindungsgemäße Vorrichtung kann aufgrund der Mittel zum Ein- und Auskoppeln elektrischer Leistung auch über lange Zeiträume hinweg zur Lastflusssteuerung eingesetzt werden, da die Mittel zum Ein- und Auskoppeln elektrischer Leistung es ermöglichen, die beispielsweise von einer Längsspannungsquelle abgegebene elektrische Leistung für beliebige Zwecke sinnvoll einzusetzen. Benötigt die Längsspannungsquelle hingegen elektrische Leistung, beispielsweise um den Laststrom in ihrem Abzweig herabzusetzen, kann diese von einer unabhängigen Quelle mit der benötigten Leistung versorgt werden. Ausgekoppelte elektrische Leistung kann zur Versorgung eines in der Nähe des Gleichspannungsnetzknotens gelegenen Netzes eingesetzt werden, das beispielsweise mit einer weiteren Energiequelle oder mit zusätzlichen Verbrauchern verbunden ist. Statt eines Netzes ist es auch möglich einen Verbraucher direkt mit den Mitteln zum Ein- und Auskoppeln elektrischer Leistung zu Verbinden. Der Verbraucher ist beispielsweise mit einer alternativen Energiequelle verbunden. Bei dem Verbraucher kann es sich jedoch auch gleichzeitig um einen Energiespeicher, beispielsweise einem Hydroenergiespeicher, einen mechanischen Speicher, einen elektrischen oder chemischen Energiespeicher handeln. Im Bedarfsfall wird der Verbraucher dann zur Energiequelle. Wie bereits ausgeführt wurden kann der Verbraucher auch ein klassischer Energieverbraucher, beispielsweise eine Industrieanlage, eine Wohnansiedlung oder dergleichen, sein.

Besondere Vorteile bieten sich jedoch, wenn die Mittel zum Ein- und Auskoppeln elektrischer Leistung mit Mitteln zum Ein- und Auskoppeln elektrischer Leistung wenigstens einer weiteren Vorrichtung zum Schalten eines Gleichstroms gekoppelt sind, die in einem anderen Abzweig des gleichen Gleichspannungsnetzknotens angeordnet ist. Gemäß dieser vorteilhaften Ausgestaltung der Erfindung kann beispielsweise die in einem Abzweig entnommene Leistung in die Längsspannungsquelle einer identisch aufgebauten Vorrichtung eingekoppelt werden, die in einem anderen Abzweig angeordnet ist. In diesem Zusammenhang ist es keineswegs notwendig, dass alle Abzweige des Gleichspannungsnetzknotens mit einer erfindungsgemäßen Vorrichtung ausgerüstet sind. Vielmehr ist es ausreichend, wenn wenigstens zwei Abzweige eines Gleichspannungsnetzknotens eine erfindungsgemäße Vorrichtung aufweisen und die beiden erfindungsgemäßen Vorrichtungen miteinander über die Mittel zum Ein- und Auskoppeln elektrischer Leistung gekoppelt sind. Auch hier ist es wieder vorstellbar, eine unabhängige Energiequelle oder einen Energiespeicher vorzusehen, der die trotz der Kopplung der beiden Vorrichtungen auftretende überschüssige Energie oder Leistung zwischenspeichert und gegebenenfalls wieder in das Gesamtsystem zurückgibt. Auch kann mit der überschüssigen Leistung ein Verbraucher versorgt werden. Zur Vollständigen Lastflusskontrolle ist die Anzahl der erfindungsgemäßen Vorrichtungen an einem Gleichspannungsnetzknoten um eins geringer als die Anzahl der Abzweige des besagten Netzknotens. Ist also n die Anzahl der Abzweige des Gleichspannungsnetzknotens berechnet sich die zur vollständigen Lastflusskontrolle notwendige Anzahl m der erfindungsgemäßen Vorrichtungen nach m = n -1.

Erfindungsgemäß ist eine Vorrichtung vorgesehen, die über ihre Mittel zum Ein- und Auskoppeln elektrischer Energie mit anderen Vorrichtungen koppelbar ist, die ebenfalls Mittel zum Ein- und Auskoppeln elektrischer Energie aufweist. Die erfindungsgemäße Vorrichtung ist zum Einsatz in einem Hochspannungsgleichstromnetz vorgesehen, wobei die Kopplung mehrerer Vorrichtungen über eine Niederspannungssammelschiene möglich ist. Dies vermindert den Aufwand zum Leistungsaustausch beträchtlich. Die Längsspannungsquelle der erfindungsgemäßen Vorrichtung wird im Rahmen der Erfindung in zwei Fällen eingesetzt. So dient sie zum einen als Kommutierungsspannung, wenn beispielsweise Kurzschlussströme unterbrochen werden sollen. Zunächst wird ein hoher Stromanstieg und/oder ein zu hoher Strom über eine bestimmte Zeitdauer hinweg detektiert. Anschließend wird ein Auslösesignal an eine Auslöseeinheit des mechanischen Schalters im Dauerstrompfad gesandt. Gleichzeitig werden die Leistungshalbleiterschalter der Leistungshalbleitereinheit im Schaltpfad eingeschaltet. Schließlich wird eine Gegenspannung erzeugt, die in der aus Dauerstrompfad und Schaltstrompfad gebildeten Masche einen Kreisstrom erzeugt, der dem zu schaltenden Kurzschlussstrom im Dauerstrompfad entgegengesetzt ist. Die Längsspannungsquelle erzeugt beispielsweise aktiv eine Gegenspannung. Abweichend hiervon ist die Längsspannungsquelle, wie in der eingangs genannten Druckschrift, als elektronischer Hilfsschalter realisiert. Als elektronischer Hilfsschalter eignet sich z.B. ein IGBT oder IGCT mit gegensinnig paralleler Freilaufdiode. Selbstverständlich können auch mehrere in Reihe geschaltete elektronische Hilfsschalter eingesetzt werden, die antiseriell angeordnet sind. Das Abschalten des Hilfsschalters kann dem Anlegen einer Gegenspannung, die dem Stromfluss im Dauerstrompfad entgegenwirkt, gleichgesetzt werden. Mittels der Längsspannungsquelle wird der Strom in den Abschaltzweig kommutiert, so dass der mechanische Schalter stromlos geöffnet werden. Das eigentliche Unterbrechen des Kurzschlussstromes erfolgt in der Leistungsschalteinheit. Dies ist jedoch beispielsweise aus der WO 2011/057675 A1 bekannt, so dass eine genauere Darstellung an dieser Stelle entfallen kann.

Erfindungsgemäß ist die Längsspannungsquelle mit einer für Wechselstrom ausgelegten Niederspannungssammelschiene verbunden. Niederspannung bedeutet hierbei eine Spannung von wenigen Kilovolt im Gegensatz zu den Betriebsspannungen des Abzweigs von einigen hundert Kilovolt.

Gemäß einer bevorzugten Ausgestaltung der Erfindung ist die Längsspannungsquelle im Dauerstrompfad angeordnet. In diesem Fall kann die zur Erzeugung einer Gegenspannung notwendige Energie beispielsweise zum Laden von Kondensatoren oder zum Betreiben der Leistungselektronik direkt dem Abzweig entnommen werden, in den die erfindungsgemäße Vorrichtung seriell geschaltet ist.

Die Längsspannungsquelle kann im Rahmen der Erfindung grundsätzlich beliebig ausgebildet sein. Besondere Vorteile werden jedoch darin gesehen, dass die Längsspannungsquelle wenigstens ein Submodul aufweist, das mit einem Energiespeicher und einer Leistungshalbleiterschaltung ausgerüstet ist, wobei jedes Submodul über Mittel zum Ein- und Auskoppeln elektrischer Leistung verfügt. Sind mehrere Submodule dieser Art vorgesehen, so sind diese Submodule in Reihe miteinander geschaltet. Solche Submodule werden auch in so genannten modularen Multilevel-Umrichtern der Energieübertragung und Energieverteilung eingesetzt.

Vorteilhafterweise verfügt jedes Submodul über eine Halbbrückenschaltung. Solche Halbbrückenschaltungen sind mit einer Leistungshalbleiterschaltung ausgerüstet, die aus einer Reihenschaltung zweier Leistungshalbleiterschalter besteht, wobei die Reihenschaltung einem Energiespeicher, beispielsweise einem unipolaren Speicherkondensator, parallel geschaltet ist. Der Potenzialpunkt zwischen den beiden Leistungshalbleiterschaltern der Reihenschaltung ist mit einer ersten Anschlussklemme verbunden, wobei ein Pol des Energiespeichers mit einer zweiten Anschlussklemme des Submoduls verbunden ist.

Den Leistungshalbleiterschaltern ist im Bedarfsfall eine gegensinnige Freilaufdiode parallel geschaltet. Als Leistungshalbleiterschalter kommen beispielsweise IGBTs oder IGCTs in Betracht. Durch die Halbbrückenschaltung ist an den Anschlussklemmen eines jeden Submoduls entweder die an dem Energiespeicher abfallende Energiespeicherspannung U_{C} oder aber eine Nullspannung erzeugbar. Gemäß dieser vorteilhaften Weiterentwicklung kann die Längsspannungsquelle daher aktiv eine Gegenspannung in nur einer Richtung erzeugen. So eignen sich Halbbrückenschaltungen insbesondere dann, wenn die Richtung der einzuprägenden Gegenspannung bekannt ist.

Um eine Spannung jedoch in beiden Richtungen aufbauen zu können, sind Submodule vorteilhaft, die über eine Vollbrückenschaltung verfügen. Auch diese Submodule werden in Reihe geschaltet, so dass die Längsspannungsquelle aus einer Reihenschaltung von Submodulen besteht. Die eine Vollbrückenschaltung aufweisenden Submodule sind jeweils zwei Reihenschaltungen aus zwei Leistungshalbleiterschaltern ausgerüstet, wobei der Potenzialpunkt zwischen den beiden in Reihe geschalteten Leistungshalbleiterschaltern der ersten Reihenschaltung mit der ersten Anschlussklemme und der Potenzialpunkt zwischen den beiden Leistungshalbleiterschaltern der zweiten Reihenschaltung mit der zweiten Anschlussklemme verbunden ist. Beide Reihenschaltungen sind einem Energiespeicher parallel geschaltet. Insgesamt weist die Vollbrückenschaltung also vier Leistungshalbleiterschalter auf. Jedem dieser Leistungshalbleiterschalter ist im Bedarfsfall wieder eine Freilaufdiode gegensinnig parallel geschaltet. Aufgrund dieser Schaltungsanordnung ist an den Anschlussklemmen eines jeden Submoduls entweder die an dem Energiespeicher abfallende Energiespeicherspannung U_{C}, eine Nullspannung oder aber die inverse Energiespeicherspannung -U_{C} erzeugbar. Somit können mit einer Reihenschaltung solcher Vollbrückensubmodule Gegenspannungen in beiden Richtungen aufgebaut werden, wobei die maximale Gegenspannung von der Anzahl der Submodule abhängig ist. Durch Einsatz eines Pulsweitenmodulation bei der Ansteuerung der Leistungshalbleiterschalter kann die Gegenspannung quasi kontinuierlich zwischen der maximalen positiven und der maximalen inversen Energiespeicherspannung variiert werden.

Zweckmäßigerweise ist durch die Mittel zum Ein- und Auskoppeln elektrischer Leistung eine Wechselspannung im Niederspannungsbereich erzeugbar. Die Wechselspannung hat den Vorteil, dass diese einfach beispielsweise induktiv und kostengünstig mit anderen Wechselspannung erzeugenden Mittel zum Ein- und Auskoppeln elektrischer Leistung gekoppelt werden kann.

Gemäß einer diesbezüglich zweckmäßigen Weiterentwicklung weisen die Mittel zum Ein- und Auskoppeln elektrischer Leistung wenigstens eine dem Energiespeicher parallel geschaltete Reihenschaltung aus zwei ein- und abschaltbaren Leistungshalbleiterschaltern und eine Spule auf. Die Spule ist mit einer ihrer Klemmen mit dem Potentialpunkt zwischen den Leistungshalbleiterschaltern der besagten Reihenschaltung verbunden. Gemäß einer diesbezüglichen Weiterentwicklung, kommt neben einer Spule noch wenigstens ein Kondensator zum Einsatz. Auch können zwei Reihenschaltungen nach Gestalt einer hartgeschalteten Vollbrücke eingesetzt werden, wobei die Potenzialpunkte zwischen den beiden Leistungshalbleiterschaltern der beiden Reihenschaltungen mit unterschiedlichen Klemmen der Spule verbunden sind.

Zweckmäßigerweise ist die Spule induktiv mit einer Spule einer Längsspannungsquelle einer weiteren erfindungsgemäßen Vorrichtung gekoppelt, die in einem anderen Abzweig des Gleichspannungsnetzknotens angeordnet ist. Diese induktive Kopplung erfolgt beispielsweise über Einzeltransformatoren. Die Einzeltransformatoren weisen Sekundärwicklungen auf, die mit der Niederspannungssammelschiene verbunden sind. Auch ist es möglich, alle Spulen auf einen gemeinsamen Transformator anzuordnen.

Die Erfindung betrifft ebenfalls einen Netzspannungsknoten mit Abzweigen, wobei in wenigstens zwei Abzweigen eine Vorrichtung gemäß der vorliegenden Erfindung angeordnet ist. Zweckmäßigerweise sind die Mittel zum Ein- und Auskoppeln elektrischer Leistung der wenigstens zwei Vorrichtung gemäß der Erfindung über eine Niederspannungssammelschiene miteinander gekoppelt. Die Niederspannungssammelschiene ist beispielsweise für Wechselspannungen ausgelegt.

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei gleiche Bezugszeichen auf gleich wirkende Bauteile verweisen und wobei
- Figur 1: einen Gleichspannungsnetzknoten mit einer Reihe von Abzweigen zeigt, in denen jeweils ein Ausführungsbeispiel der erfindungsgemäßen Vorrichtung schematisch dargestellt ist,
- Figur 2: ein Ausführungsbeispiel der erfindungsgemäßen Vorrichtung schematisch verdeutlicht,
- Figur 3: ein Ausführungsbeispiel einer Längsspannungsquelle der Vorrichtung gemäß Figur 2 verdeutlicht,
- Figur 4: ein Submodul einer Längsspannungsquelle einschließlich der Mittel zum Ein- und Auskoppeln elektrischer Leistung verdeutlicht,
- Figur 5: ein weiteres Ausführungsbeispiel eines erfindungsgemäßen Gleichspannungsnetzknotens mit drei Abzweigen zeigt, in denen jeweils ein Ausführungsbeispiel der erfindungsgemäßen Vorrichtung angeordnet ist,
- Figuren 6 - 11: jeweils ein Ausführungsbeispiel der Mittel zum Ein- und Auskoppeln elektrischer Leistung schematisch verdeutlichen und
- Figuren 12 - 14: Ausführungsbeispiele von Transformatoren zum Koppeln der Wechselspannungen verdeutlichen, welche durch die Mittel zum Ein- und Auskoppeln elektrischer Leistung erzeugbar sind.

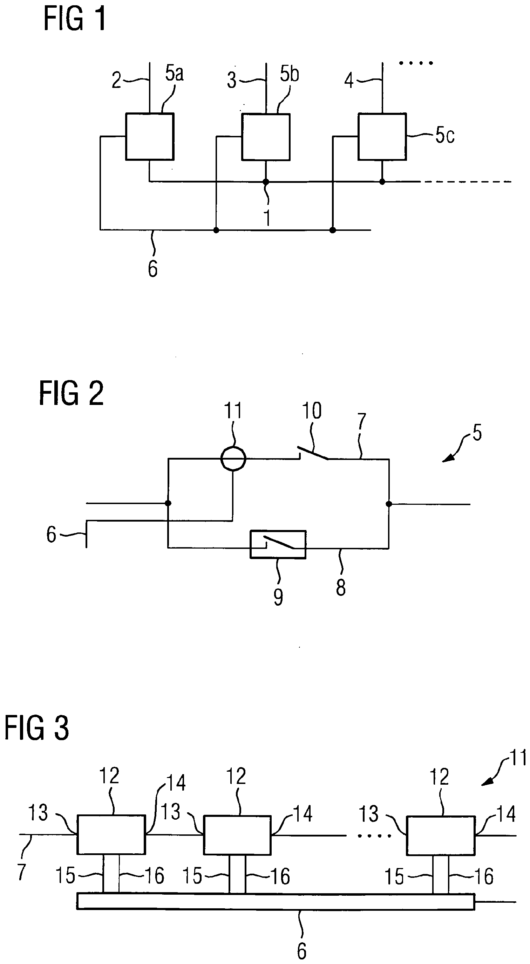

Figur 1 zeigt ein Ausführungsbeispiel eines erfindungsgemäßen Gleichspannungsnetzknotens 1, der eine Reihe von Abzweigen 2, 3, 4 aufweist, in denen jeweils ein Ausführungsbeispiel der erfindungsgemäßen Vorrichtung 5 angeordnet sind. Jede Vorrichtung 5 weist figürlich nicht dargestellte Mittel zum Ein- und Auskoppeln elektrischer Leistung auf, wobei die Mittel zum Ein- und Auskoppeln elektrischer Leistung über eine Niederspannungssammelschiene 6 miteinander verbunden sind. Auf diese Art und Weise ist ein Leistungsaustausch zwischen den Vorrichtungen 5a, 5b und 5c ermöglicht.

Figur 2 zeigt ein Ausführungsbeispiel der erfindungsgemäßen Vorrichtung 5 genauer. Die Vorrichtung 5 weist einen Dauerstrompfad 7 sowie einen Abschaltstrompfad 8 auf, in dem eine Leistungsschalteinheit 9 angeordnet ist. Die Leistungsschalteinheit 9 ist zum Unterbrechen hoher Kurzschlussströme, die von Hochspannungen bis zu 500 kV getrieben sind, eingerichtet. Solche Leistungsschalteinheiten sind dem Fachmann bekannt, so dass an dieser Stelle nicht ausführlich auf deren Ausgestaltung eingegangen wird. Sie weisen beispielsweise eine Reihenschaltung von Leistungshalbleiterschaltern, IGBTs, IGCTs GTOs oder dergleichen auf, denen jeweils eine Freilaufdiode gegensinnig parallel geschaltet ist. Dabei sind die Leistungshalbleiterschalter und somit die ihnen zugeordneten Freilaufdioden nicht alle in die gleiche Stromrichtung orientiert. Vielmehr ermöglicht eine antiserielle Anordnung der Leistungshalbleiterschalter Ströme in beiden Richtungen zu schalten. Zum Abbau der beim Schalten frei werdenden Energie dienen Ableiter in Parallelschaltung zu den Leistungshalbleiterschaltern.

Im Dauerstrompfad 7 ist ein schneller mechanischer Schalter 10 angeordnet, der bei Normalbetrieb geschlossen ist. Ferner ist eine Längsspannungsquelle 11 schematisch verdeutlicht und die Niederspannungssammelschiene 6 zum Koppeln der Vorrichtungen 5a, 5b und 5c. Wie bereits erläutert wurde, erzeugt die Längsspannungsquelle in der aus Dauerstrompfad 7 und Abschaltpfad 8 bestehenden Masche aktiv eine Gegenspannung. Die Gegenspannung sorgt für einen Kreisstrom in der Masche, der dem Betriebsgleichstrom im Dauerstrompfad entgegengesetzt ist. Der resultierende Strom im Dauerstrompfad kann somit begrenzt oder vollständig unterdrückt werden.

Figur 3 zeigt ein Ausführungsbeispiel der Längsspannungsquelle 11, die dort aus einer Reihenschaltung von Submodulen 12 besteht. Die Submodule 12 weisen jeweils eine erste Anschlussklemme 13 sowie eine zweite Anschlussklemme 14 auf. Dabei sind die Anschlussklemmen 13 und 14 im Dauerstrompfad 7 angeordnet, wo sie bei Normalbetrieb einen Gleichstrom führen. Jedes Submodul weist ferner eine erste Wechselspannungsanschlussklemme 15 sowie eine zweite Wechselspannungsanschlussklemme 16 auf. Die beiden Wechselspannungsanschlussklemmen 15 und 16 sind jeweils mit der Niederspannungssammelschiene 6 verbunden. Hierbei können beispielsweise Induktivitäten, Transformatoren oder dergleichen zum Einsatz gelangen, worauf später noch genauer eingegangen werden wird.

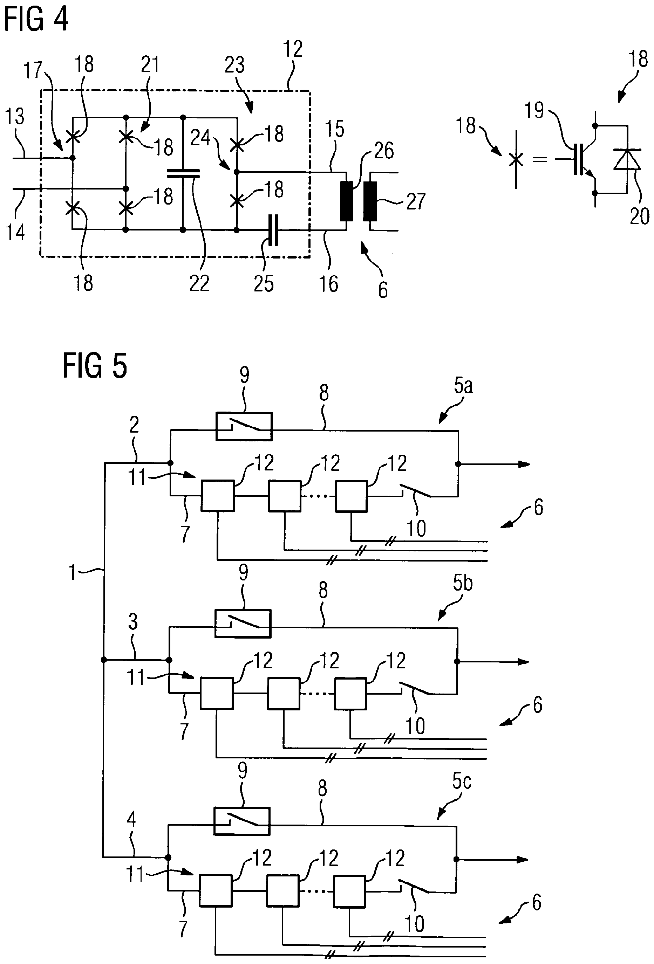

Figur 4 zeigt ein Ausführungsbeispiel eines Submoduls 12 genauer, wobei das in Figur 4 dargestellte Submodul eine Vollbrückenschaltung aufweist. Mit anderen Worten weist das Submodul 12 eine erste Reihenschaltung aus zwei Leistungshalbleiterschalteinheiten 18 auf. Jede Leistungshalbleiterschalteinheit 18 besteht aus einem IGBT 19 als Leistungshalbleiterschalter sowie aus einer gegensinnig parallel dazu geschaltete Freilaufdiode 20. Ferner ist eine zweite Reihenschaltung 19 erkennbar, die ebenfalls aus zwei Leistungshalbleiterschalteinheiten 18 gebildet ist. Die erste Reihenschaltung 17 und die zweite Reihenschaltung 21 sind jeweils einem Energiespeicher 22, der als Speicherkondensator ausgebildet ist, parallel geschaltet. Der Potenzialpunkt zwischen den Leistungshalbleiterschalteinheiten 18 der ersten Reihenschaltung 17 ist mit der ersten Anschlussklemme 13 und der Potenzialpunkt zwischen den Leistungshalbleiterschalteinheiten 18 der zweiten Reihenschaltung 21 mit der zweiten Anschlussklemme 14 des Submoduls 12 verbunden. Ferner sind Mittel zum Ein- und Auskoppeln elektrischer Leistung 23 vorgesehen, die eine Reihenschaltung 24 aus zwei Leistungshalbleiterschalteinheiten 18 aufweist, wobei der Potenzialpunkt zwischen den Leistungshalbleiterschalteinheiten 18 der Reihenschaltung 24 mit der ersten Wechselspannungsanschlussklemme 15 verbunden ist. Die zweite Wechselspannungsanschlussklemme 16 ist über einen Kondensator 25 an dem Pol des Energiespeichers 22 angeschlossen. Ferner weisen die Mittel zum Ein- und Auskoppeln elektrischer Leistung 23 eine Induktivität 26 auf, die mit einer Induktivität 27 der Niederspannungssammelschiene 6 gekoppelt ist. Die Induktivität oder Spule 26 muss aufgrund einer fehlenden Erdung nicht für Hochspannungen im Bereich von 500 kV ausgelegt werden. Aufgrund ihres Anschlusses an einem der Pole des Energiespeichers, also an dem Zwischenkreis, unter Zwischenschaltung eines Kondensators liegen die mit ihr erzeugbaren Wechselspannungen im Niederspannungsbereich.

Figur 5 zeigt ein weiteres Ausführungsbeispiel des erfindungsgemäßen Gleichspannungsnetzknotens 1 mit drei Abzweigen 2, 3, 4, in denen jeweils ein Ausführungsbeispiel der erfindungsgemäßen Vorrichtung 5a, 5b, beziehungsweise 5c angeordnet ist. Wie bereits im Zusammenhang mit der Beschreibung der Figuren 1 bis 4 ausgeführt ist, weist jede Vorrichtung 5a, 5b oder 5c jeweils eine Leistungsschalteinheit 9 auf, die in dem Schaltstrompfad 8 angeordnet ist. Im Dauerstrompfad 7 sind wieder ein mechanischer Freischalter 10 und eine Längsspannungsquelle 11 angeordnet, die aus einer Reihenschaltung von Submodulen 12 besteht, wobei jedes Submodul mit Mitteln zum Ein- und Auskoppeln elektrischer Leistung ausgerüstet ist. Diese Mittel zum Ein- und Auskoppeln elektrischer Leistung sind über eine Niederspannungssammelschiene miteinander gekoppelt.

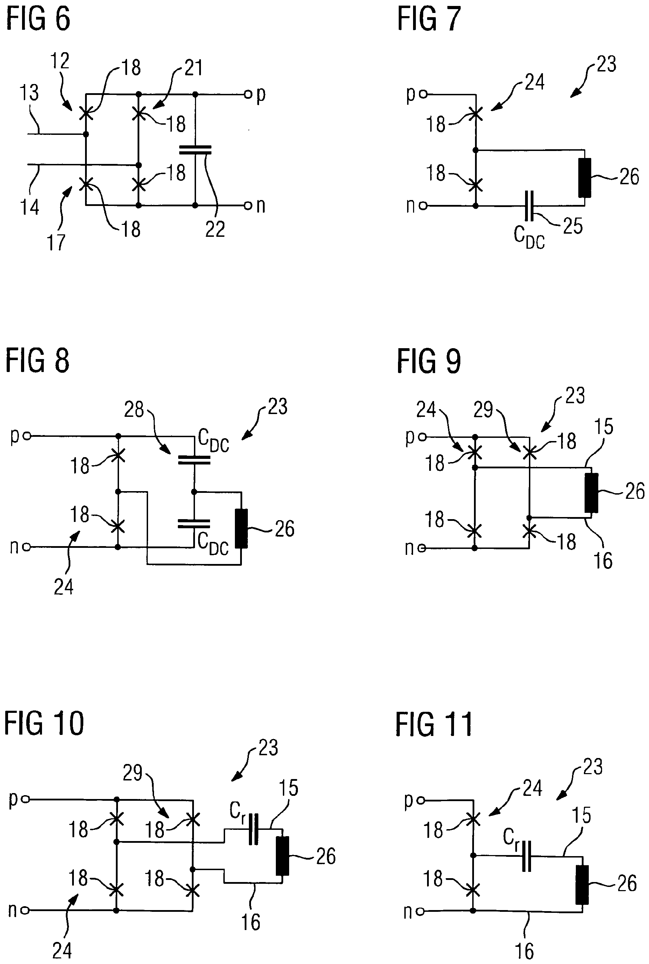

Figur 6 zeigt noch einmal ein Submodul 12 mit Vollbrücke, auf das bereits im Zusammenhang mit Figur 4 eingegangen wurde. In Figur 6 ist das Submodul 12 jedoch ohne Mittel zum Ein- und Auskoppeln elektrischer Leistung gezeigt. Stattdessen sind gleichspannungsseitige Anschlusspunkte P und N zum Anschluss der Mittel 23 zum Ein- und Auskoppeln elektrischer Leistung verdeutlicht.

In den Figuren 7, 8, 9, 10 und 11 sind unterschiedliche Ausgestaltungen der Mittel zum Ein- und Auskoppeln elektrischer Leistung 23 gezeigt. Figur 7 zeigt ein erstes Ausführungsbeispiel der Mittel zum Ein- und Auskoppeln elektrischer Leistung 23, das bereits im Zusammenhang mit Figur 4 erläutert wurde. Figur 8 zeigt ein weiteres Ausführungsbeispiel der Mittel zum Ein- und Auskoppeln elektrischer Leistung 23, die dem Beispiel gemäß Figur 7 entsprechend als Halbbrücke ausgestaltet sind und eine Reihenschaltung 24 aus zwei Leistungshalbleiterschalteinheiten 18 aufweisen, wobei der Reihenschaltung 24 eine Reihenschaltung aus zwei Kondensatoren C_{DC} parallel geschaltet ist. Der Potenzialpunkt zwischen den beiden Kondensatoren ist mit der ersten Klemme der Spule 26 verbunden, wobei die andere Klemme der Spule 26 mit dem Potenzialpunkt zwischen den Leistungshalbleiterschalteinheiten 18 der Reihenschaltung 24 verbunden ist. Wie die in Figur 7 dargestellte Ausgestaltung der Mittel zum Ein- und Auskoppeln elektrischer Leistung handelt es sich bei dem Ausführungsbeispiel gemäß Figur 8 um eine hart schaltende Halbbrücke. Im Vergleich zu Figur 7 ist jedoch der Zwischenkreis durch die Kondensatoren C_{DC} als Spannungsteiler realisiert.

Figur 9 zeigt ein weiteres Ausführungsbeispiel der Mittel zum Ein- und Auskoppeln elektrischer Leistung 23, die neben einer ersten Reihenschaltung aus zwei Leistungshalbleiterschalteinheiten eine zweite Reihenschaltung 29 aus zwei Leistungshalbleiterschalteinheiten 18 aufweist. Der Potenzialpunkt zwischen den Leistungshalbleiterschalteinheiten 18 der ersten Reihenschaltung 24 ist über die erste Wechselspannungsanschlussklemme 15 mit einer ersten Klemme der Spule 26 verbunden, während der Potenzialpunkt zwischen den Leistungshalbleiterschalteinheiten 18 der zweiten Reihenschaltung 29 über die zweite Wechselspannungsanschlussklemme 16 mit der anderen Klemme der Spule 26 verbunden ist. Die Schaltung gemäß Figur 9 kann als hart geschaltete Vollbrücke bezeichnet werden.

Das Ausführungsbeispiel gemäß Figur 10 entspricht weitestgehend dem Ausführungsbeispiel gemäß Figur 9, wobei jedoch in der ersten Wechselspannungsanschlussklemme 15, also wechselspannungsseitig, ein Kondensator Cᵣ angeordnet ist. Hierbei handelt es sich demnach um eine resonant geschaltete Vollbrücke.

Figur 11 entspricht weitestgehend dem Ausführungsbeispiel gemäß Figur 7, wobei jedoch der Kondensator auf der Wechselspannungsseite der Spule 26 als Resonanzkondensator angeordnet ist. Die Mittel 23 zum Ein- und Auskoppeln elektrischer Leistung gemäß Figur 11 kann somit als resonant geschaltete Halbbrücke bezeichnet werden.

Hinsichtlich der Ausführungsbeispiele 7 bis 11 lässt sich zusammenfassen, dass die Mittel zum Ein- und Auskoppeln elektrischer Leistung als Halb- oder Vollbrücke sowohl hart schaltend als auch resonant schaltend ausgeführt sein können. Die resonante Schaltung hat den Vorteil der höher erreichbaren Taktfrequenz und somit einer kleineren Größe des oder der Transformatoren zur Kopplung der Induktivitäten unterschiedlicher erfindungsgemäßer Vorrichtungen.

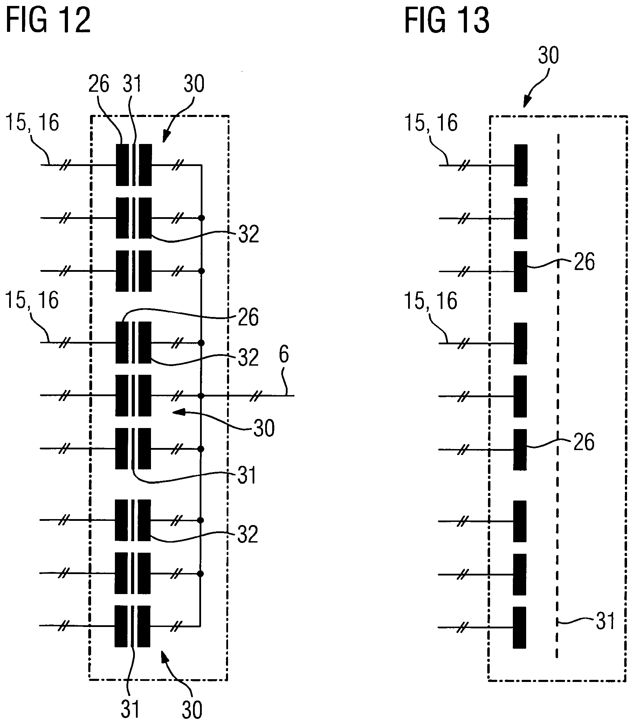

Mögliche Realisierungen solcher Transformatoren 30 sind in den Figuren 12, 13 und 14 gezeigt. Bei dem Ausführungsbeispiel gemäß Figur 12 ist eine Vielzahl von Einzeltransformatoren 30 vorgesehen. Die Primärwicklung jedes Einzeltransformators 30 wird durch eine Spule 26 der Mittel zum Ein- und Auskoppeln elektrischer Leistung 23 gebildet. Sie wird über einen Kern 31 des Transformators 30 mit einer Sekundärwicklung 32 gekoppelt. Alle Sekundärwicklungen sind über die Sammelschiene 6 miteinander verbunden.

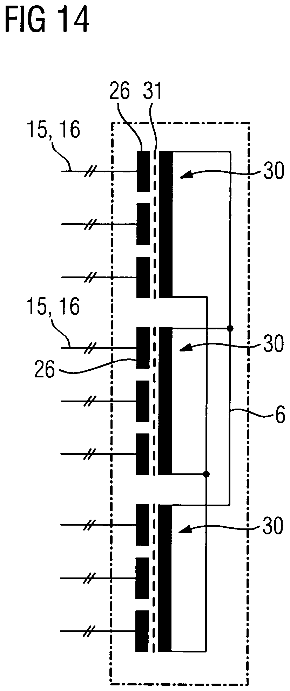

Figur 14 zeigt ein Ausführungsbeispiel mit drei Transformatoren 30. Die Sekundärwicklungen der Transformatoren 30 sind wieder über eine Sammelschiene 6 miteinander verbunden. Allerdings sind die Sekundärwicklungen jeweils mit mehreren Induktivitäten oder Spulen 26 der Mittel zum Ein- und Auskoppeln elektrischer Leistung 23 gekoppelt. Im Gegensatz zu den Ausführungsbeispielen 12 und 14 weist der Trafo 30 gemäß Figur 13 keine Sekundärwicklungen und keine Sammelschiene 6 auf. Die Induktivitäten der Mittel zum Ein- und Auskoppeln elektrischer Leistung sind vielmehr allein über den Kern 31 des Transformators miteinander gekoppelt. Die ausgetauschten Leistungen addieren sich in diesem Fall zu null.

## Patentansprüche

1. Vorrichtung (5,5a,5b,5c) zum Schalten eines Gleichstromes in einem Abzweig (2,3,4) eines Gleichspannungsnetzknotens (1) mit
- einem Dauerstrompfad (7), in dem ein mechanischer Schalter (10) angeordnet ist,
- einem den Dauerstrompfad (7) überbrückenden Schaltstrompfad (8), in dem eine Leistungsschalteinheit (9) angeordnet ist, die ein- und abschaltbare Leistungshalbleiterschalter aufweist und die zum Unterbrechen eines Kurzschlussstromes im Fehlerfall eingerichtet ist, und
- einer Längsspannungsquelle (11) zum Erzeugen einer Gegenspannung in der aus Dauerstrompfad und Schaltstrompfad gebildeten Masche,
**dadurch gekennzeichnet, dass**
die Längsspannungsquelle (11) Mittel (23) zum Ein- und Auskoppeln elektrischer Leistung aufweist, die mit einem zusätzlichen Verbraucher verbindbar sind und einen Austausch elektrischer Leistung zwischen der Längsspannungsquelle und dem zusätzlichen Verbraucher ermöglichen.

2. Vorrichtung (5,5a,5b,5c) nach Anspruch 1,
**dadurch gekennzeichnet, dass**
die Mittel (23) zum Ein- und Auskoppeln elektrischer Leistung mit Mitteln (23) zum Ein- und Auskoppeln elektrischer Leistung einer weiteren Vorrichtung (5,5a,5b,5c) zum Schalten eines Gleichstroms gekoppelt ist, die in einem anderen Abzweig (2,3,4) des gleichen Gleichspannungsnetzknotens (1) angeordnet ist.

3. Vorrichtung (5,5a,5b,5c) nach Anspruch 1 oder 2,
**dadurch gekennzeichnet, dass**
die Längsspannungsquelle (11) im Dauerstrompfad (7) angeordnet ist.

4. Vorrichtung (5,5a,5b,5c) nach einem der vorhergehenden Ansprüche,
**dadurch gekennzeichnet, dass**
die Längsspannungsquelle (11) wenigstens ein Submodul (12) mit einem Energiespeicher (22) und einer Leistungshalbleiterschaltung (17,21) aufweist und ferner mit Mitteln (23) zum Ein- und Auskoppeln elektrischer Leistung ausgerüstet ist.

5. Vorrichtung (5,5a,5b,5c) nach Anspruch 4,
**dadurch gekennzeichnet, dass**
jedes Submodul (12) eine Halbbrückenschaltung aufweist.

6. Vorrichtung (5,5a,5b,5c) nach Anspruch 4,
**dadurch gekennzeichnet, dass**
jedes Submodul (12) eine Vollbrückenschaltung aufweist.

7. Vorrichtung (5,5a,5b,5c) nach einem der Ansprüche 4 bis 6,
**dadurch gekennzeichnet, dass**
durch die Mittel (23) zum Ein- und Auskoppeln elektrischer Leistung eine Wechselspannung im Niederspannungsbereich erzeugbar ist.

8. Vorrichtung (5,5a,5b,5c) nach Anspruch 7,
**dadurch gekennzeichnet, dass**
die Mittel (23) zum Ein- und Auskoppeln elektrischer Leistung wenigstens eine dem Energiespeicher (22) parallel geschaltete Reihenschaltung (24) aus zwei ein- und abschaltbaren Leistungshalbleiterschaltern (19) und eine Spule (26) aufweisen.

9. Vorrichtung (5,5a,5b,5c) nach Anspruch 8,
**dadurch gekennzeichnet, dass**
die Spule (26) induktiv mit einer Spule (26) einer Längsspannungsquelle (11) einer weiteren Vorrichtung (5,5a,5b,5c) nach Anspruch 8 gekoppelt ist, die in einem anderen Abzweig (2,3,4) des gleichen Gleichspannungsnetzknotens (1) angeordnet ist.

10. Gleichspannungsnetzknoten (1) mit Abzweigen,
**dadurch gekennzeichnet, dass**
in wenigstens zwei Abzweigen (2,3,4) eine Vorrichtung (5,5a,5b,5c) gemäß einem der Ansprüche 1 bis 9 angeordnet ist, wobei die Vorrichtung (5,5a,5b,5c) über die Mittel (23) zum Ein- und Auskoppeln von elektrischer Leistung miteinander gekoppelt sind, so dass eine Lastflusssteuerung ermöglicht ist.

11. Gleichspannungsnetzknoten (1) nach Anspruch 10,
**dadurch gekennzeichnet, dass**
die Mittel (23) zum Ein- und Auskoppeln elektrischer Leistung über eine Niederspannungssammelschiene (6) miteinander gekoppelt sind.

12. Gleichspannungsnetzknoten (1) nach Anspruch 10 oder 11,
**dadurch gekennzeichnet, dass**
die Längsspannungsquellen (11) induktiv miteinander gekoppelt sind.

## Claims

1. Device (5, 5a, 5b, 5c) for switching a direct current in a branch (2, 3, 4) of a DC voltage network node (1), having
- a permanent current path (7), in which a mechanical switch (10) is arranged,
- a switched current path (8), which bridges the permanent current path (7) and in which a power switching unit (9) is arranged, which power switching unit has power semiconductor switches which can be switched on and off and is set up to interrupt a short-circuit current in the event of a fault, and
- a longitudinal voltage source (11) for generating a back-emf in the mesh formed by permanent current path and switched current path,
**characterized in that**
the longitudinal voltage source (11) has means (23) for connecting and disconnecting electric power, which can be connected to an additional consumer and makes an exchange of electric power between the longitudinal voltage source and the additional consumer possible.

2. Device (5, 5a, 5b, 5c) according to Claim 1,
**characterized in that**
the means (23) for connecting and disconnecting electric power is coupled to means (23) for connecting and disconnecting electric power of a further device (5, 5a, 5b, 5c) for switching a direct current, which further device for switching a direct current is arranged in another branch (2, 3, 4) of the same DC voltage network node (1).

3. Device (5, 5a, 5b, 5c) according to Claim 1 or 2,
**characterized in that**
the longitudinal voltage source (11) is arranged in the permanent current path (7).

4. Device (5, 5a, 5b, 5c) according to any of the preceding claims,
**characterized in that**
the longitudinal voltage source (11) has at least one submodule (12) with an energy store (22) and a power semiconductor circuit (17, 21) and, furthermore, is equipped with means (23) for connecting and disconnecting electric power.

5. Device (5, 5a, 5b, 5c) according to Claim 4,
**characterized in that**
each submodule (12) has a half-bridge circuit.

6. Device (5, 5a, 5b, 5c) according to Claim 4,
**characterized in that**
each submodule (12) has a full-bridge circuit.

7. Device (5, 5a, 5b, 5c) according to any of Claims 4 to 6,
**characterized in that**
an AC voltage in the low-voltage range can be generated using the means (23) for connecting and disconnecting electric power.

8. Device (5, 5a, 5b, 5c) according to Claim 7,
**characterized in that**
the means (23) for connecting and disconnecting electric power has at least one series circuit (24) composed of two power semiconductor switches (19) which can be switched on and off and a coil (26) connected in parallel with the energy store (22).

9. Device (5, 5a, 5b, 5c) according to Claim 8,
**characterized in that**
the coil (26) is inductively coupled to a coil (26) of a longitudinal voltage source (11) of a further device (5, 5a, 5b, 5c) according to claim 8, which further device is arranged in another branch (2, 3, 4) of the same DC voltage network node (1).

10. DC voltage network node (1) with branches,
**characterized in that**
a device (5, 5a, 5b, 5c) according to any of Claims 1 to 9 is arranged in at least two branches (2, 3, 4), wherein the devices (5, 5a, 5b, 5c) are coupled to one another via the means (23) for connecting and disconnecting electric power, with the result that load-flow control is made possible.

11. DC voltage network node (1) according to Claim 10,
**characterized in that**
the means (23) for connecting and disconnecting electric power are coupled to one another via a low-voltage busbar (6).

12. DC voltage network node (1) according to Claim 10 or 11,
**characterized in that**
the longitudinal voltage sources (11) are inductively coupled to one another.

## Revendications

1. Système (5, 5a, 5b, 5c) pour faire passer un courant continu dans un embranchement (2, 3, 4) d'un noeud (1) de réseau à tension continue, comprenant
- un trajet (7) de courant permanent, dans lequel est monté un interrupteur (10) mécanique,
- un trajet (8) de courant de shunt, qui shunte le trajet (7) de courant permanent et dans lequel est montée une unité (9) de disjoncteur, qui a un interrupteur de puissance à semi-conducteur pouvant être fermé et ouvert et qui est conçue pour interrompre un courant de court-circuit en cas de défaillance et
- une source (11) de tension longitudinale pour produire une tension antagoniste dans la maille formée du trajet de courant permanent et du trajet de courant de shunt,
**caractérisé en ce que**
la source (11) de tension longitudinale a des moyens (23) pour faire entrer et sortir de la puissance électrique, moyens qui peuvent être reliés à un consommateur supplémentaire et qui rendent possible un échange de puissance électrique entre la source de tension longitudinale et le consommateur supplémentaire.

2. Système (5, 5a, 5b, 5c) suivant la revendication 1,
**caractérisé en ce que**
les moyens (23), pour faire entrer et sortir de la puissance électrique, sont couplés, pour le passage d'un courant continu, à des moyens (23) d'entrée et de sortie de puissance électrique d'un autre système (5, 5a, 5b, 5c) monté dans un autre embranchement (2, 3, 4) du même noeud (1) de réseau à tension continue.

3. Système (5, 5a, 5b, 5c) suivant la revendication 1 ou 2,
**caractérisé en ce que**
la source (11) de tension longitudinale est montée dans le trajet (7) de courant permanent.

4. Système (5, 5a, 5b, 5c) suivant l'une des revendications précédentes,
**caractérisé en ce que**
la source (11) de tension longitudinale a au moins un sous-module (12) ayant un accumulateur (22) d'énergie et un circuit (17, 21) à semi-conducteur de puissance et est équipée en outre de moyens (23), pour faire entrer et sortir de la puissance électrique.

5. Système (5, 5a, 5b, 5c) suivant la revendication 4,
**caractérisé en ce que**
chaque sous-module (12) a un circuit en demi-pont.

6. Système (5, 5a, 5b, 5c) suivant la revendication 4,
**caractérisé en ce que**
chaque sous-module (12) a un circuit en pont complet.

7. Système (5, 5a, 5b, 5c) suivant l'une des revendications 4 à 6,
**caractérisé en ce qu'**
une tension alternative dans le domaine de la basse tension peut être produite par les moyens (23) pour faire entrer et sortir de la puissance électrique.

8. Système (5, 5a, 5b, 5c) suivant la revendication 7,
**caractérisé en ce que**
les moyens (23) pour faire entrer et sortir de la puissance électrique ont au moins un circuit (24) série, monté en parallèle à l'accumulateur (22) d'énergie et composé de deux interrupteurs (19) à semi-conducteur de puissance pouvant être fermés et ouverts et d'une bobine (26).

9. Système (5, 5a, 5b, 5c) suivant la revendication 8,
**caractérisé en ce que** la bobine (26) est couplée inductivement à une bobine (26) d'une source (11) de tension longitudinale d'un autre système (5, 5a, 5b, 5c) suivant la revendication 8, qui est montée dans un autre embranchement (2, 3, 4) du même noeud (1) de réseau à tension continue.

10. Noeud (1) de réseau à tension continue ayant des embranchements,
**caractérisé en ce qu'**
un système (5, 5a, 5b, 5c) suivant l'une des revendications 1 à 9 est monté dans au moins deux embranchements (2, 3, 4), les systèmes (5, 5a, 5b, 5c) étant couplés entre eux par les moyens (23) pour faire entrer et sortir de la puissance électrique, de manière à permettre une commande du flux de charge.

11. Noeud (1) de réseau à tension continue suivant la revendication 10,
**caractérisé en ce que**
les moyens (23) pour faire entrer et sortir la puissance électrique sont couplés entre eux par un rail (6) collecteur en basse tension.

12. Noeud (1) de réseau à tension continue suivant la revendication 10 ou 11,
**caractérisé en ce que**
les sources (11) de tension longitudinale sont couplées entre elles par induction.
